# EUROPÄISCHE PATENTANMELDUNG

(11) **EP 0 759 487 A1**
(43) Veröffentlichungstag der Anmeldung: **26.02.1997**
(21) Anmeldenummer: 96110779.4
(22) Anmeldetag: 04.07.1996
(51) Int. Cl.: E03B 7/07, F16L 39/00

(54) **Anschlussstück**

(30) Priorität: 09.08.1995 DE 29512786 U
(71) Anmelder: Judo Wasseraufbereitung GmbH, D-71364 Winnenden (DE)
(72) Erfinder: Söcknick, Ralf, Dr., 70806 Kornwestheim (DE); Schuler, Torsten, 71573 Allmersbach (DE); Fiess, Helmut, 71576 Burgstetten (DE)
(74) Vertreter: KOHLER SCHMID + PARTNER

(57) **Zusammenfassung**

Ein Anschlußstück zum Einbau in die Rohrleitung eines Wassernetzes, welches einen Flansch zum Anschließen eines Wasserbehandlungsgerätes mit einem dazu passenden Gegenflansch aufweist, wobei zur Herstellung einer kraftschlüssigen Verbindung zwischen Flansch und Gegenflansch mehrere Schrauben bzw. Gewindebolzen vorgesehen sind, und die durch entsprechende Bohrungen im Flansch ragen, wobei der Innendurchmesser der Bohrungen ungefähr dem Gewindeaußendurchmesser der Schrauben entspricht, ist dadurch gekennzeichnet, daß im Gegenflansch (9') zur Montage des Wasserbehandlungsgerätes an das Anschlußstück (1') die Schrauben zumindest teilweise schon vormontiert sind, daß im Flansch (90') seitlich an jeder Bohrung (5') eine Ausnehmung (12') vorgesehen ist, die es ermöglicht, beim Zusammenführen von Flansch und Gegenflansch den Schraubenkopf seitlich an der jeweiligen Bohrung im Flansch vorbei auf die dem Gegenflansch abgewandte Rückseite des Flansches zu führen, und daß zwischen jeder Bohrung (5') und der zugehörigen Ausnehmung (12') ein Durchbruch (13') vorgesehen ist, der es erlaubt, mittels einer Relativbewegung zwischen Flansch und Gegenflansch die Schrauben in ihre jeweilige Endlage in der entsprechenden Bohrung (5') des Flansches (90') zu bringen.

## Beschreibung

Die vorliegende Erfindung betrifft ein Anschlußstück zum Einbau in die Rohrleitung eines Wassernetzes, insbesondere eines Hauswassernetzes, welches einen Flansch zum Anschließen eines Wasserbehandlungsgerätes mit einem dazu passenden Gegenflansch aufweist, wobei in der Flanschebene sowohl ein Anschluß für einen Wasserzulauf zum Wasserbehandlungsgerät als auch ein Anschluß für einen Wasserrücklauf vom Wasserbehandlungsgerät ausgebildet ist, wobei zwischen Flansch und Gegenflansch Dichtelemente zum Abdichten des Wasserzulaufs gegen den Wasserablauf sowie des Wassernetzes gegen die Umgebung angeordnet sind und wobei zur Herstellung einer kraftschlüssigen Verbindung zwischen Flansch und Gegenflansch mehrere Schrauben bzw. Gewindebolzen vorgesehen sind, die vorzugsweise gleichmäßig um den Umfang von Flansch und Gegenflansch verteilt sind, und die durch entsprechende Bohrungen im Flansch ragen, wobei der Innendurchmesser der Bohrungen ungefähr dem Gewindeaußendurchmesser der Schrauben bzw. dem Außendurchmesser der Gewindebolzen entspricht.

Derartige Anschlußstücke, auch Einbaudrehflansche genannt, sind bekannt z. B. aus dem Firmenprospekt "Das ist JUDO - Wir setzen Maßstäbe in der Wasseraufbereitung" der Firma JUDO Wasseraufbereitung GmbH in D-71351 Winnenden, März 1995, Seiten 17, 18, 22, 23, 25 und 26.

Sie werden eingesetzt für den Anschluß von Wasserbehandlungsgeräten mit ca. 1 - 20 m³/h Nenndurchfluß an Rohrleitungsnetze mit Rohrleitungsdurchmesser von ca. 1/2 Zoll bis ca. 2 Zoll (ca. 12 mm - 50 mm) . Die Vorteile derartiger Anschlußstücke bestehen darin, daß sie bereits in der Rohbauphase in die Rohrleitung eines Wassernetzes eingebaut und mit einem Blindflanschdeckel versehen werden können - wobei die eigentliche Montage des Wasserbehandlungsgerätes erst nach der Rohbauphase erfolgt (geringeres Beschädigungsrisiko). Außerdem kann die Montage in jede Fließrichtung erfolgen. Der Anschluß verschiedenster Wasserbehandlungsgeräte wie z. B. Filter, Hauswasserstationen, Enthärtungsanlagen, Geräte zum Korrosionsschutz sowie zur Härtestabilisierung am gleichen Anschlußstück ist mittels weniger (z. B. vier) Schrauben möglich. Darüber hinaus kann mit einem derartigen Anschlußstück die mechanische Befestigung zumindest kleinerer Wasserbehandlungsgeräte wie z. B. Filter oder Dosierpumpen direkt an der Wasserleitung erfolgen, wodurch eine zusätzliche Gerätehalterung überflüssig wird. Vorteilhaft ist bei einem Anschlußstück der oben beschriebenen Art weiterhin, daß es sehr einfach aufgebaut ist und daher entsprechend kostengünstig hergestellt werden kann.

Als nachteilig in der Praxis hat sich jedoch herausgestellt, daß das Einführen der Schrauben von der Wandseite her durch Flansch und Gegenflansch sowie das anschließende Einschrauben der Schrauben von Hand bzw. mit einem entsprechenden Handwerkzeug - insbesondere bei kleinem Wandabstand der Rohrleitung - sehr mühsam ist und häufig zu Beschwerden von seiten der Installateure führt (siehe Figuren 6a-6c).

Als Weiterentwicklung ist weiterhin ein ähnliches Anschlußstück der Firma BWT Wassertechnik GmbH bekannt. Das sogenannte "Basismodul" mit Sicherungsring, wie in dem Firmenprospekt "Hydro MODUL" vom März 1994 gezeigt und beschrieben ist, ersetzt die Schraubenverbindung des Anschlußstückes der oben beschriebenen Art durch einen bajonettartig ausgebildeten Flansch und einen entsprechenden Gegenflansch. Dies ermöglicht eine einfache Montage von Wasserbehandlungsgeräten an dieses Anschlußstück - ohne Schraubenverbindungen. Das bekannte Wasserbehandlungsgerät wird mit seinem Gegenflansch einfach um einen bestimmten Winkel (kleiner oder gleich 90°) verdreht an den Flansch des Anschlußstückes angesetzt und in seine Endposition gedreht. Die Teile des Bajonettverschlusses greifen ineinander und pressen gleichzeitig die Flansche aneinander, so daß die Dichtungselemente gepreßt werden, um ihre Funktion zu erfühlen.

Dies führt jedoch gleichzeitig zu einer Reihe von Nachteilen: Derartige Anschlußstücke sind wesentlich aufwendiger zu fertigen und die einzuhaltenden Toleranzen müssen sehr klein gewählt werden, damit der Anschluß für den Wasserzulauf zum Wasserbehandlungsgerät und der Anschluß für den Wasserrücklauf vom Wasserbehandlungsgerät sowohl gegeneinander als auch gegen die Umgebung zuverlässig abgedichtet werden. Dies gilt insbesondere vor dem Hintergrund, daß sich die elastischen Dichtelemente natürlich neben der Belastung durch den Wasserdruck auch zusätzlich durch das Gerätegewicht verformen können und somit bei zu großen Toleranzen bzw. zu großer Bewegungsfreiheit des Gegenflansches relativ zum Flansch zu Undichtigkeiten führen können. Entscheidend ist hierbei, daß diese Art von bajonettartig ausgebildetem Flansch im Gegensatz zu einem Schraubenflansch nicht nachziehbar ist.

Außerdem ist ein derartiges Anschlußstück nicht mit den bisher üblicherweise verwendeten Schraubenflanschen kompatibel, was neben logistischen Problemen bei der Markteinführung eines solchen neuartigen Anschlußstückes (doppelte Lagerhaltung während einer mehrjährigen Übergangszeit, Adapter für ältere Gerätemodelle an neue Anschlußstücke und umgekehrt) insbesondere die Umkonstruktion der (geräteseitigen) Gegenflansche einer gesamten Produktpalette erforderlich macht.

Eine weitere Einschränkung ergibt sich durch die Tatsache, daß die Anschlüsse in der Flanschebene zumindest annähernd als konzentrische Kreise ausgebildet sein müssen.

Ein weiteres ähnliches Anschlußstück ist aus der EP 0 148 813 A2 bekannt. Hier werden Flansch und Gegenflansch mittels einer Überwurfmutter miteinander verbunden. Dies macht jedoch ein langes zylinderförmiges Teilstück zwischen einem potentiellen Gerät und dem dazugehörigen Gegenflansch erforderlich und vergrößert und verteuert dieses Teil unnötig. Außerdem sind für das Anziehen einer derartigen Verbindung erhebliche Kräfte erforderlich, um die nötige Pressung der Dichtelemente sicherzustellen.

Darüber hinaus gibt es eine Reihe weiterer Lösungsansätze für den Anschluß mehrerer paralleler Flüssigkeitsleitungen an ein Anschlußstück.

Die DE 42 09 000 C1 beschreibt z. B. ein Verbindergehäuse mit Einstecköffnungen und einem Verriegelungsschieber mit zumindest teilweisen schlüssellochartigen Ausnehmungen, der mit den Flüssigkeitsleitungen verbundene, in die Einstecköffnungen eingesteckte Einsteckteile durch Querverschieben am Verbindergehäuse fixiert. An der Mündung einer jeden Einstecköffnung liegt ein O-Ring in einer dort- befindlichen Ringnut ein, auf den sich beim Einstecken der Einsteckteile ein an diesen jeweils radial überstehender Ringwulst auflegt.

Da die mit einem derartigen Verriegelungsschieber zur Pressung der Dichtungselemente aufbringbaren Kräfte sehr beschränkt sind, eignet sich dieses System naturgemäß insbesondere für z. B. Schlauchstecknippel o. ä. mit kleinen Durchmessern. Außerdem ist ein koaxialer Anschluß mehrerer Leitungen, wie er beim Drehflansch beschrieben wurde, hier nicht vorgesehen.

Eine weitere ähnliche Variante ist die in der DE 38 10 385 C2 beschriebene Einrichtung zum axialen Sichern mehrerer Schlauchstecknippel oder einsteckbarer Leitungsenden. Hier werden die in ein Anschlußstück parallel zueinander eingesteckten und in Umfangsrichtung mit z. B. O-Ringen abgedichteten Schlauchstecknippel o. ä. mit einer um eine Achse drehbaren Drehschieberplatte gesichert, wobei die mit jeweils einem Sicherungsbund versehenen Schlauchstecknippel o. ä. durch schlüssellochartige Ausnehmungen in der Drehschieberplatte hindurch in das Anschlußstück gesteckt werden und anschließend durch Verdrehen der Drehschieberplatte am Sicherungsbund fixiert werden. Da hierbei der gesamte Schlauchstecknippel bzw. das gesamte Leitungsende mit dem Drehschieber gesichert wird, kommen als anzuschließende Leitungsdimensionen sicherlich nur kleine Durchmesser in Frage. Im anderen Fall müßte der Drehschieber und dessen Befestigung sehr groß, stabil und damit aufwendig dimensioniert werden. Ein koaxialer Anschluß mehrerer Leitungen ist ebenfalls nicht vorgesehen und würde auch zu einem größeren Rohraußendurchmesser und damit zu höheren Fertigungskosten für den Drehschieber führen.

Eine Kupplung für eine koaxiale Anordnung von mindestens zwei Rohrleitungen ist aus DE 43 10 700 A1 bekannt. Hier wird in ein Anschlußgehäuse dichtungstechnisch aufwendig die koaxiale Anordnung hineingesteckt und mit einer bajonettartig ausgebildeten Überwurfmutter arretiert. Diese Kupplung ist jedoch nicht dazu geeignet, zusätzlich das Gewicht eines Wasserbehandlungsgerätes zu tragen.

DE-PS 26 07 505 beschreibt eine Flanschverbindung für koaxial verlaufende Rohrleitungen mit Fest- oder Losflanschen wie sie für beheizte oder gekühlte Rohrleitungen eingesetzt werden. Das Grundprinzip entspricht dem Einbaudrehflansch. Für derartige Rohrleitungen ist jedoch eine aufwendige Schweißkonstruktion erforderlich, die für ein Anschlußstück der eingangs beschriebenen Art nicht angemessen ist.

Eine weitere Möglichkeit, mehrere Leitungen gleichzeitig mit einem Anschlußstück zu verbinden, wird in der DE 20 59 576 C3 für eine Steckkupplung für mehradrige hydraulische oder pneumatische Leitungen beschrieben. Die Leitungsenden bzw. Schlauchstecknippel werden in ein Anschlußstück gesteckt, dort in Umfangsrichtung mittels O-Ringen abgedichtet und mit einem Spannungsbügel arretiert.

Eine weitere bajonettartige Verbindungsvariante zum Verbinden der Bestandteile pneumatischer oder hydraulischer Geräte schließlich wird in der DE-OS 29 05 949 vorgeschlagen. Hier werden z. B. Dichtungselemente zwischen konischen Dichtflächen mechanisch vorgepreßt und mit einem mehreckigen Geräteteil in einer hinterschnittenen Eindrehung verankert.

Aufgabe der vorliegenden Erfindung ist es demgegenüber, ein Anschlußstück der eingangs beschriebenen Art vorzustellen, das zumindest bei kleineren Wasserbehandlungsgeräten eine zusätzliche Halterung überflüssig macht, einfach und kostengünstig herstellbar ist, möglichst kleine Abmessungen aufweist, kompatibel zu dem beispielsweise in dem eingangs zitierten Firmenprospekt der Fa. JUDO beschriebenen bekannten Einbaudrehflansch ist (ohne Adapter), eine nachziehbare Pressung der Dichtelemente gegen Undichtigkeiten ermöglicht und leichter zu montieren ist als der bekannte Einbaudrehflansch.

Gelöst wird diese Aufgabe ebenso kostengünstig wie überraschend einfach, wenn man bedenkt, daß derartige Drehflanschanschlüsse seit über zwanzig Jahren gebräuchlich sind und die Montage der Schraubenverbindung bekanntermaßen mühsam ist und zwar dadurch, daß im Gegenflansch zur Montage des Wasserbehandlungsgerätes an das Anschlußstück die Schrauben bzw. die flanschseitig mit Muttern versehenen Gewindebolzen zumindest teilweise schon vormontiert sind, daß im Flansch seitlich an jeder Bohrung eine Ausnehmung vorgesehen ist, die es ermöglicht, beim Zusammenführen von Flansch und Gegenflansch den Schraubenkopf bzw. die Mutter des Gewindebolzens seitlich an der jeweiligen Bohrung im Flansch vorbei auf die dem Gegenflansch abgewandte Rückseite des Flansches zu führen, und daß zwischen jeder Bohrung und der zugehörigen Ausnehmung ein Durchbruch vorgesehen ist, der es erlaubt, mittels einer Relativbewegung zwischen Flansch und Gegenflansch die Schrauben bzw. Gewindebolzen in ihre jeweilige Endlage in der entsprechenden Bohrung des Flansches zu bringen.

Das erfindungsgemäße Anschlußstück erfordert im Vergleich zu einer bekannten bajonettartigen Verbindung nicht unbedingt eine Verdrehsicherung, da die Schrauben ja festgezogen werden und sich hierdurch automatisch eine Arretierung der Flansche zueinander ergibt. Ein weiterer Vorteil des erfindungsgemäßen Anschlußstückes liegt darin, daß die Anschlüsse für Wasserzu- und -rücklauf nicht als konzentrische Kreise angeordnet sein müssen (im Vergleich zu einem bajonettartigen Flansch). Vielmehr ist jede konzentrisch angeordnete Querschnittsform möglich; sie muß lediglich entlang der möglichen Wasserfließrichtungen Symmetrieachsen aufweisen. Dies ist möglich, da die Flanschverbindung erst dann abgedichtet wird, wenn die Schrauben angezogen werden, und dies geschieht erst, wenn Flansch und Gegenflansch in der richtigen Winkelposition um die gemeinsame Achse zueinander angeordnet sind.

Bei einer vorteilhaften Ausführungsform des erfindungsgemäßen Anschlußstückes ist der Flansch im Bereich der Bohrungen dergestalt erweitert, daß die Ausnehmungen und die Durchbrüche von den Ausnehmungen zu den Bohrungen vom Flanschmaterial umschlossen sind. Dadurch ist der Flansch besonders stabil und verformt sich auch bei starkem Anziehen der Schrauben nicht.

Alternativ sind bei einer weiteren Ausführungsform die Ausnehmungen und Durchbrüche von den Ausnehmungen zu den Bohrungen nicht vollständig vom Flanschmaterial umschlossen.

Dadurch können die vormontierten Schrauben bzw. Gewindebolzen seitlich in die Bohrungen eingeführt werden.

Bei einer weiteren Ausführungsform sind die Ausnehmungen und die Durchbrüche von den Ausnehmungen zu den Bohrungen dergestalt ausgeführt, daß die Bohrungen hierdurch senkrecht oder parallel zur Wasserleitung schlitzförmig erweitert und diese Schlitze nicht vollständig vom Flanschmaterial umschlossen sind. Diese Ausführungsform ist besonders einfach herstellbar, allerdings können nur die auf einer Seite des Flansches befindlichen Schrauben bzw. Gewindebolzen eingehängt werden, während die auf der anderen Seite befindlichen Schrauben oder Gewindebolzen noch nicht vormontiert sein dürfen, da sie einem Einhängen in die schlitzförmigen Erweiterungen im Wege stehen würden.

Eine weitere Ausführungsform des erfindungsgemäßen Anschlußstückes zeichnet sich dadurch aus, daß das Anschlußstück einen Loseflanschring besitzt, der Bohrungen, Ausnehmungen und Durchbrüche von den Ausnehmungen zu den Bohrungen aufweist und sich an dem Flansch mit den Bohrungen bzw. einem Flanschring abstützt. Diese Ausführungsform gewährleistet eine besonders einfache Montage des Wasserbehandlungsgerätes an das Anschlußstück.

Vorteilhaft ist auch eine Ausführungsform, bei der die dem Gegenflansch abgewandte Seite des Anschlußstückflansches bzw. eines Loseflanschringes im Bereich der Bohrungen Vertiefungen für die Zentrierung von Schraubenköpfen aufweist. Dadurch werden beim Anziehen der Schrauben Flansch und Gegenflansch optimal und verdrehsicher zueinander positioniert.

Durch das Einbringen eines Stopfens in mindestens eine der Ausnehmungen ist bei weiteren Ausführungsformen auf einfache Weise eine zusätzliche Verdrehsicherung der Anordnung herstellbar.

Vorzugsweise besitzen die verwendeten Schrauben zylinderförmige Schraubenköpfe, die besonders einfach durch die Bohrungen, Ausnehmungen und Durchbrüche frontal hindurchsteckbar sind. Zum leichtgängigen Einführen können die Zylinderoberflächen der Schraubenköpfe glatt sein.

Vorteilhaft kann es bei Weiterbildungen dieser Ausführungsformen aber auch sein, wenn die Zylinderoberfläche der Schraubenköpfe gerändelt ist. Dadurch lassen sich die Schrauben von Hand vordrehen, um eine provisorische Befestigung des zu montierenden Wasserbehandlungsgerätes am Anschlußstück zu erreichen, bevor dann die Schrauben mittels eines Werkzeuges derart festgezogen werden, daß eine Dichtungswirkung zwischen dem Wasserbehandlungsgerät und dem Anschlußstück eintritt.

Vorteilhafterweise finden Schrauben Verwendung, die im Bereich des montierten Flansches kein Gewinde aufweisen. Im axialen Bereich des Flansches würde das Gewinde nur störend bei der Montage wirken. Die gleiche Maßnahme kann auch bei der Verwendung von Gewindebolzen statt Schrauben vorgesehen werden.

Bei einer weiteren Ausführungsform schließlich sind die Bohrungen im Flansch so angeordnet, daß sie kompatibel zu den Bohrungen eines bekannten Anschlußstückes nach dem Stand der Technik sind, daß sie also am Flanschumfang an den gleichen Stellen angeordnet sind wie bisher. Damit ist das erfindungsgemäße Anschlußstück voll kompatibel mit bereits im Handel und gar im Einsatz befindlichen Wasserbehandlungsgeräten.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1:: Flanschseitige Ansicht eines erfindungsgemäßen Anschlußstückes;
- Fig. 2a:: Wasserbehandlungsgerät mit vormontierten Schrauben;
- Fig. 2b:: Gegenflanschseitige Ansicht des Wasserbehandlungsgerätes mit vormontierten Schrauben und vormontierten Dichtelementen nach Fig. 2a;
- Fig. 2c:: Montageweg der vormontierten Schrauben im erfindungsgemäßen Anschlußstück nach Fign. 2a und 2b;
- Fig. 2d:: Fertig montiertes Wasserbehandlungsgerät an einem erfindungsgemäßen Anschlußstück nach Fign. 2a-2c;
- Fig. 3:: Flanschseitige Ansicht einer weiteren Ausführungsform des erfindungsgemäßen Anschlußstückes;
- Fig. 4a:: Loseflanschring einer weiteren Ausführungsform des erfindungsgemäßen Anschlußstückes;
- Fig. 4b:: Seitenansicht des Anschlußstückes nach Fig. 4a;
- Fig. 4c:: Flanschseitige Ansicht des Anschlußstückes nach Fig. 4a;
- Fig. 5: Flanschseitige Ansicht einer weiteren Ausführungsform des erfindungsgemäßen Anschlußstückes;
- Fig. 6a: Flanschseitige Ansicht eines bekannten Anschlußstückes (JUDO);
- Fig. 6b:: Draufsicht auf ein in einer Rohrleitung installiertes Anschlußstück nach Fig. 6a; und
- Fig. 6c:: Explosionszeichnung bestehend aus bekanntem Anschlußstück gemäß Fign. 6a und 6b, Dichtelementen und Wasserbehandlungsgerät.

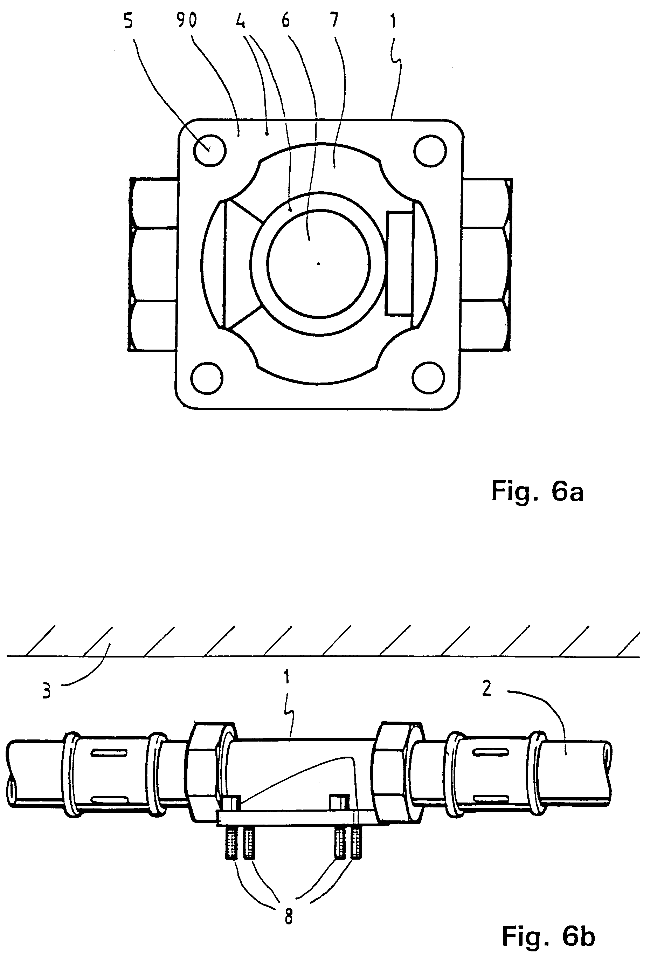

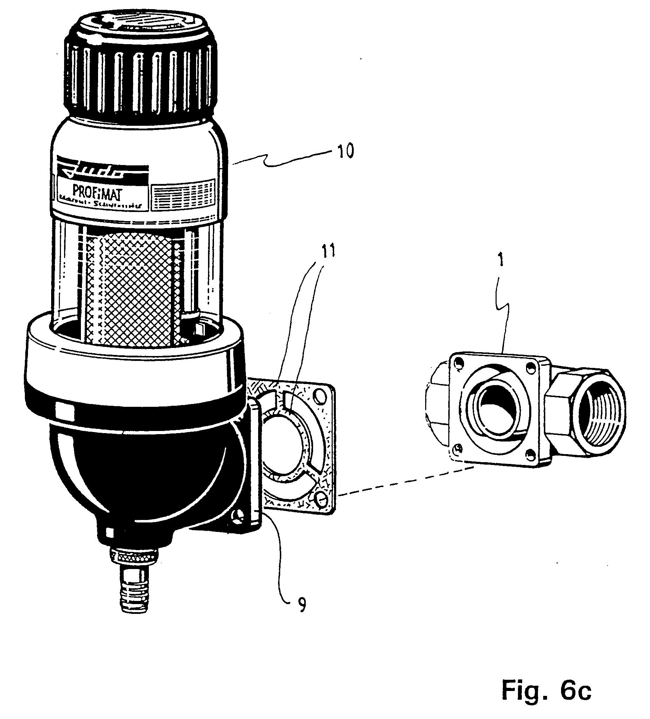

Die Figuren 6a-c zeigen ein bekanntes Anschlußstück (1), wie es z. B. von der Fa. JUDO Wasseraufbereitung GmbH verwendet wird. Fig. 6a zeigt einen Flansch (90), die Flanschdichtflächen (4), Bohrungen (5), einen Anschluß für den Wasserzulauf (6) zum Wasserbehandlungsgerät sowie einen Anschluß für einen Wasserrücklauf (7) vom Wasserbehandlungsgerät. In Fig. 6b kann man sehr gut die Problematik beim Herstellen der Schraubenflanschverbindung bei geringem Abstand einer Rohrleitung (2) zur Wand (3) erkennen. Allein schon das Einführen der Schrauben (8) in die Bohrungen (5) ist schwierig. Das Einschrauben der Schrauben in den Gegenflansch (9) (s. Fig. 6c) mit Hilfe eines Handwerkzeuges jedoch ist ausgesprochen mühselig. Während des Einführens und Einschraubens der ersten Schrauben muß natürlich auch das Gerätegewicht von Hand in der Montageposition gehalten werden. In Fig. 6c ist ein beispielhaftes Wasserbehandlungsgerät (10) (Trinkwasserfilter) dargestellt und zwar in Form einer Explosionszeichnung mit Dichtelementen (11) und dem Anschlußstück (1).

### Beispiel 1:

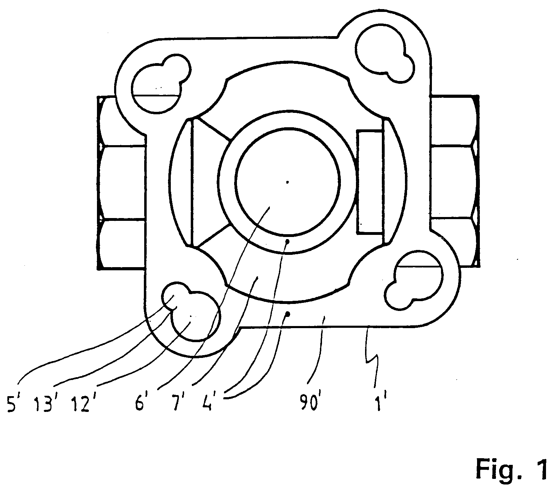

Die Fig. 1 zeigt ein erfindungsgemäßes Anschlußstück (1') mit einem Flansch (90'), Dichtflächen (4'), Bohrungen (5'), einem Zulauf (6') zu einem Wasserbehandlungsgerät, einem Rücklauf (7') vom Wasserbehandlungsgerät sowie Ausnehmungen (12') und Durchbrüchen (13'), die vom Flanschmaterial zusammen mit den Bohrungen (5') umschlossen sind.

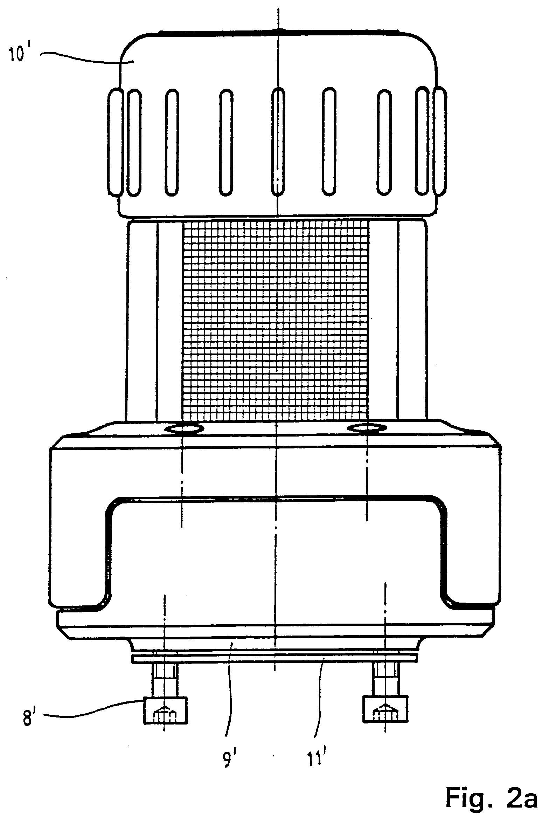

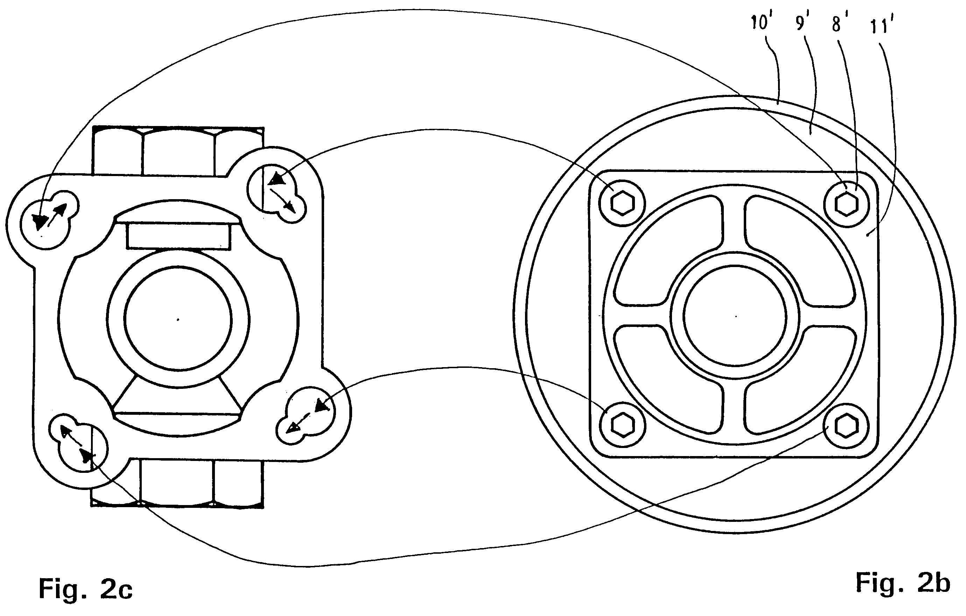

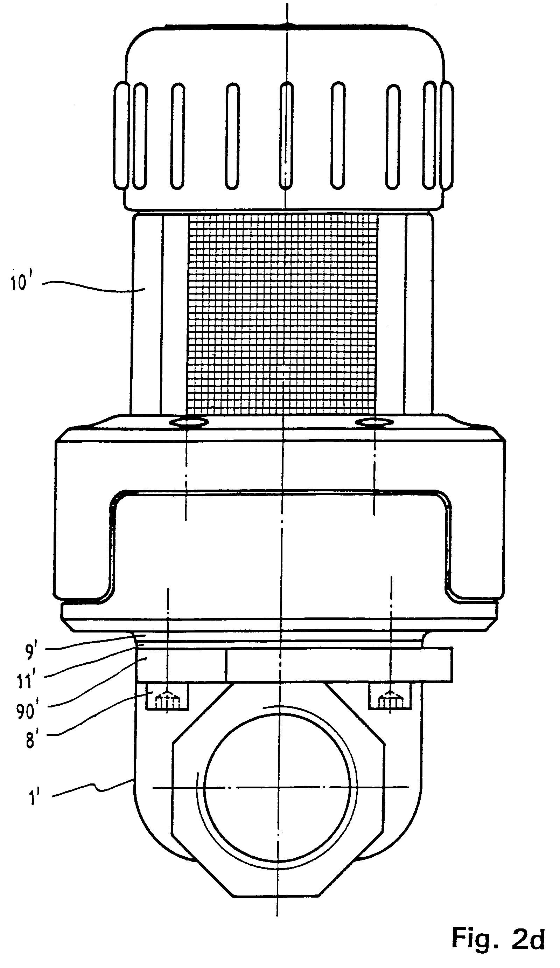

In den Fign. 2a bis 2c ist ein Wasserbehandlungsgerät (Filter) (10') dargestellt mit durch die vormontierten Schrauben (8') fixierten Dichtelementen (11'). Hierbei zeigt Fig. 2a eine Seitenansicht des Filters und Fig. 2b eine Draufsicht auf dessen Gegenflansch (9'). In der Fig. 2c ist dargestellt, wie bei der Montage des Filters die Köpfe der Schrauben (8') in die Ausnehmungen (12') eingeführt werden. Wenn sich dann Flansch (90') und Gegenflansch (9') planparallel gegenüberliegen und räumlich nur noch durch die Dicke der nicht gepreßten Dichtelemente voneinander getrennt sind, wird der Filter (1') um seine durch die Mitte des Anschlußstückes hindurchragende gedachte Achse im Uhrzeigersinn gedreht, so daß die Schrauben (8'), die soweit vormontiert sind, daß die Schraubenköpfe in dieser Position des Gegenflansches zum Flansch gerade auf der dem Gegenflansch abgewandten Rückseite des Flansches vollständig herausragen, mit ihrem Gewindeteil durch die Durchbrüche (13') in ihre Endlage in den Bohrungen (5') gebracht werden. Sind nun Flansch und Gegenflansch in der richtigen Position zueinander, trägt das Anschlußstück (1') bereits das Gewicht des Wasserbehandlungsgerätes (10') und die Schrauben (8') müssen lediglich noch mit ca. einer Umdrehung festgezogen werden, um die Flanschverbindung zu fixieren und abzudichten (Fig. 2d).

### Beispiel 2:

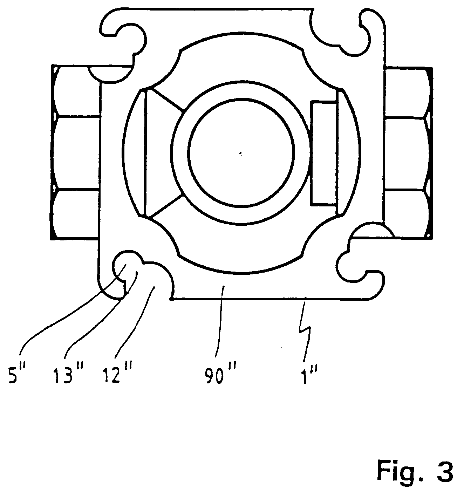

Eine weitere vorteilhafte Ausgestaltung des erfindungsgemäßen Anschlußstückes ist in Fig. 3 dargestellt. Diese Variante (1'') läßt sich einfach aus den bisher verwendeten bekannten Drehflanschen herstellen, indem die Ausnehmungen (12'') in den Flansch (90'') hineingefräst werden und zwar dergestalt, daß hierbei gleichzeitig die Durchbrüche (13'') entstehen. Die vormontierten Schraubenköpfe eines Wasserbehandlungsgerätes werden wiederum wie beim Beispiel 1 durch die Ausnehmungen (12'') hindurchgesteckt, das Wasserbehandlungsgerät in seine Endposition gedreht und die Schrauben vollends festgezogen.

### Beispiel 3:

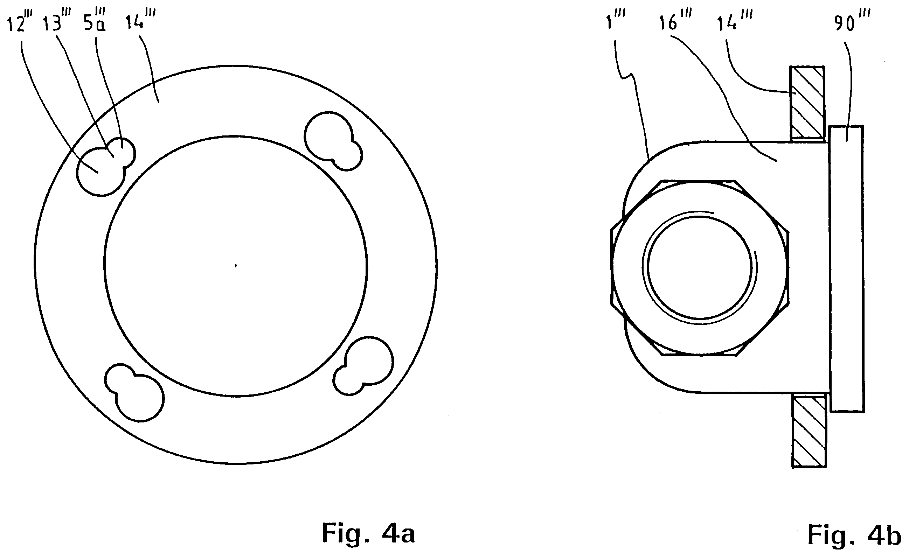

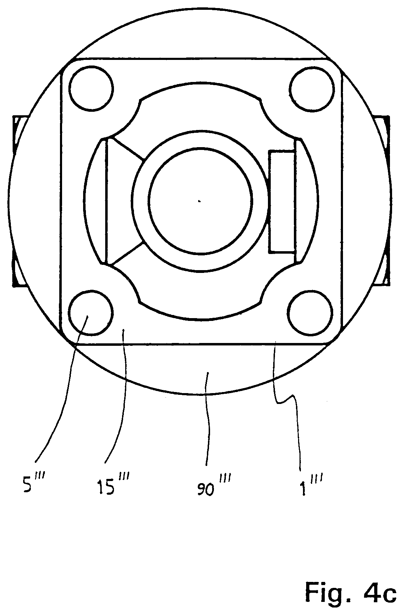

Eine besonders vorteilhafte Variante, insbesondere für den Anschluß schwerer bzw. unhandlicher Wasserbehandlungsgeräte ist in den Fig. 4a-c dargestellt. Dieses Anschlußstück (1''') hat Bohrungen (5''') mit Durchmessern, die größer als der Schraubenkopfdurchmesser sind und besitzt einen Loseflanschring (14''') mit schlüssellochartigen Ausnehmungen, die aus den Ausnehmungen (12''') und den Durchbrüchen (13''') zu den Bohrungen (5a''') bestehen. Dieser Loseflanschring (14''') stützt sich an der dem Gegenflansch abgewandten Rückseite des Flansches (90''') ab. Alternativ kann der die Bohrungen (5''') beinhaltende Flanschbereich entfallen, so daß sich der Loseflanschring an einem verbleibenden Ringflansch des Anschlußstückes abstützen kann.

Für die Montage eines Wasserbehandlungsgerätes an dieses Anschlußstück werden nun die im Gerät vormontierten Schrauben durch die Bohrungen (5''') (bzw. wenn dieser Flanschbereich durch einen Ringflansch ersetzt wurde, an diesem Ringflansch vorbei) auf die dem Gegenflansch abgewandte Rückseite des Flansches und durch die Ausnehmungen des Loseflanschringes hindurchgeführt und zwar in der endgültigen Gerätemontageposition bezüglich des Anschlußstückes. Anschließend wird der Loseflanschring um den zumindest annähernd zylindrischen Teil (16''') des Anschlußstückes (1''') entgegen dem Uhrzeigersinn gedreht und zwar dergestalt, daß die Schrauben durch die Durchbrüche (13''') in ihre Endposition, die Bohrungen (5a''') gelangen. Die Schrauben müssen nun nur noch festgezogen werden. Alternativ zu dem Loseflanschring können auch Verriegelungsschieber mit zumindest teilweisen schlüssellochartigen Ausnehmungen verwendet werden.

### Beispiel 4:

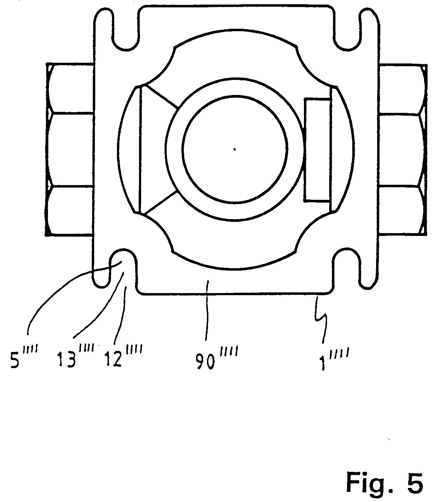

Eine besonders einfache Variante ist in der Fig. 5 dargestellt. Bei diesem Anschlußstück (1'''') darf allerdings nur ein Teil der Schrauben vormontiert werden. Günstig ist z. B., wenn die beiden oberen Schrauben vormontiert sind, denn dann kann das Wasserbehandlungsgerät mit diesen Schrauben von oben in den Flansch des Anschlußstückes eingehängt werden. D. h. das Gerätegewicht wird schon während der Montage vom Anschlußstück getragen und es müssen nur noch die beiden unteren Schrauben eingeführt, in den Gegenflansch eingeschraubt und festgezogen werden. Diese Variante kann besonders einfach aus den bisher verwendeten Einbaudrehflanschen (1) hergestellt werden, da im günstigsten Fall Ausnehmung (12''''), Durchbruch (13'''') und Bohrung (5'''') denselben Durchmesser haben.

Über diese Gestaltungsbeispiele des Anschlußstückes hinaus gibt es eine Reihe allgemeingültiger Details, die zu besonders vorteilhaften Weiterbildungen führen können:

So kann die dem Gegenflansch abgewandte Seite des Anschlußstückflansches bzw. des Loseflanschringes im Bereich der Bohrungen Vertiefungen für die Zentrierung der Schraubenköpfe aufweisen. Beim Anziehen der Schrauben werden hierdurch Flansch und Gegenflansch optimal zueinander positioniert und somit Toleranzen bezüglich der Abdichtung minimiert und die Dichtflächen ebenso wie die Auflageflächen der Schraubenköpfe optimiert. Auch wird hierdurch eine Verdrehsicherung erreicht, selbst wenn die Schrauben nicht ganz fest angezogen sind. Die Auflagefläche der Köpfe der verwendeten Schrauben bzw. zusätzlich verwendeter Unterlagsscheiben muß natürlich zu den oben genannten Vertiefungen (z. B. konisch) passen.

Eine weitere Möglichkeit für eine einfache zusätzliche Verdrehsicherung besteht im Einbringen eines Stopfens in mindestens eine der Ausnehmungen.

Die verwendeten Schrauben haben bevorzugt zylinderförmige Schraubenköpfe, besonders bevorzugt mit glatter Zylinderoberfläche zum leichtgängigen Einführen in die Ausnehmung oder mit gerändelter Zylinderoberfläche zum leichteren Einschrauben bis zum manuell erreichbaren Anschlag. Besonders bevorzugt werden die Schrauben jedoch bei der Vormontage soweit in den Gegenflansch eingeschraubt, daß die Anzahl der Umdrehungen der Schrauben bis zur Herstellung der endgültigen kraftschlüssigen Verbindung so gering als möglich ist.

Alternativ zu den o. g. Schrauben können auch in den Gegenflansch eingeschraubte Gewindebolzen verwendet werden, auf deren dem Gegenflansch abgewandten Ende entsprechend positionierte Muttern vormontiert sind.

Bei einer besonders vorteilhaften Schraubenvariante wird im Bereich des Flansches das Gewinde entfernt, wodurch die Bohrung kleiner als der Gewindedurchmesser ausgeführt werden kann und sich die Auflagefläche des Schraubenkopfes auf der Flanschrückseite entsprechend vergrößert.

Alle oben beschriebenen erfindungsgemäßen Anschlußstücke können bevorzugt so ausgeführt werden, daß die Bohrungen am Flanschumfang an den gleichen Stellen angeordnet sind wie die Bohrungen am bisher verwendeten bekannten Anschlußstück und auch die Dichtflächen unverändert bleiben können. Auch beeinträchtigen die Ausnehmungen und die Durchbrüche die Funktion nicht. Dies führt dazu, daß für die Markteinführung eines erfindungsgemäßen Anschlußstückes die bisher verwendeten geräteseitigen Gegenflansche nicht geändert werden müssen. Darüber hinaus können im Bedarfsfall die vormontierten Schrauben entfernt und die Wasserbehandlungsgeräte wie bisher üblich an ein bekanntes Anschlußstück nach den Fign. 6a-6c montiert werden bzw. ein älteres Gerät auch ohne Adapter an das neue erfindungsgemäße Anschlußstück mittels der bisher verwendeten Schrauben angeschlossen werden. Das erfindungsgemäße Anschlußstück ist also sowohl für die oben beschriebene Schnellmontage mit vormontierten Schrauben als auch nach wie vor als Schraubenflansch verwendbar. Die Anzahl der für die Funktion der beschriebenen Erfindung erforderlichen Schrauben bzw. Gewindebolzen muß mindestens zwei betragen. Die tatsächlich eingesetzte Anzahl hängt z. B. vom Flanschumfang, den verwendeten Werkstoffen und den zu erwartenden Kräften ab.

## Patentansprüche

1. Anschlußstück zum Einbau in die Rohrleitung eines Wassernetzes, insbesondere eines Hauswassernetzes, welches einen Flansch zum Anschließen eines Wasserbehandlungsgerätes mit einem dazu passenden Gegenflansch aufweist, wobei in der Flanschebene sowohl ein Anschluß für einen Wasserzulauf zum Wasserbehandlungsgerät als auch ein Anschluß für einen Wasserrücklauf vom Wasserbehandlungsgerät ausgebildet ist, wobei zwischen Flansch und Gegenflansch Dichtelemente zum Abdichten des Wasserzulaufs gegen den Wasserablauf sowie des Wassernetzes gegen die Umgebung angeordnet sind und wobei zur Herstellung einer kraftschlüssigen Verbindung zwischen Flansch und Gegenflansch mehrere Schrauben bzw. Gewindebolzen vorgesehen sind, die vorzugsweise gleichmäßig um den Umfang von Flansch und Gegenflansch verteilt sind und die durch entsprechende Bohrungen im Flansch ragen, wobei der Innendurchmesser der Bohrungen ungefähr dem Gewindeaußendurchmesser der Schrauben bzw. dem Außendurchmesser der Gewindebolzen entspricht,
dadurch gekennzeichnet,
daß im Gegenflansch (9') zur Montage des Wasserbehandlungsgerätes (10') an das Anschlußstück (1'; 1''; 1'''; 1'''') die Schrauben (8') bzw. die flanschseitig bereits mit Muttern versehenen Gewindebolzen zumindest teilweise schon vormontiert sind, daß im Flansch (90'; 90''; 90'''; 90'''') seitlich an jeder Bohrung (5'; 5''; 5a'''; 5'''') eine Ausnehmung (12'; 12''; 12'''; 12'''') vorgesehen ist, die es ermöglicht, beim Zusammenführen von Flansch und Gegenflansch den Schraubenkopf bzw. die Mutter des Gewindebolzens seitlich an der jeweiligen Bohrung im Flansch vorbei auf die dem Gegenflansch abgewandte Rückseite des Flansches zu führen, und daß zwischen jeder Bohrung (5'; 5''; 5a'''; 5'''') und der zugehörigen Ausnehmung (12'; 12''; 12'''; 12'''') ein Durchbruch (13'; 13''; 13'''; 13'''') vorgesehen ist, der es erlaubt, mittels einer Relativbewegung zwischen Flansch und Gegenflansch die Schrauben bzw. Gewindebolzen in ihre jeweilige Endlage in der entsprechenden Bohrung (5'; 5''; 5a'''; 5'''') des Flansches (90', 90'', 90'''; 90'''') zu bringen.

2. Anschlußstück nach Anspruch 1, dadurch gekennzeichnet, daß der Flansch (90') im Bereich der Bohrungen (5') dergestalt erweitert ist, daß die Ausnehmungen (12') und die Durchbrüche (13') von den Ausnehmungen (12') zu den Bohrungen (5') vom Flanschmaterial umschlossen sind.

3. Anschlußstück nach Anspruch 1, dadurch gekennzeichnet, daß die Ausnehmungen (12'') und die Durchbrüche (13'') von den Ausnehmungen (12'') zu den Bohrungen (5'') nicht vollständig vom Flanschmaterial umschlossen sind.

4. Anschlußstück nach Anspruch 1, dadurch gekennzeichnet, daß die Ausnehmungen (12'''') und die Durchbrüche (13'''') von den Ausnehmungen zu den Bohrungen (5'''') dergestalt ausgeführt sind, daß die Bohrungen hierdurch senkrecht oder parallel zur Wasserleitung schlitzförmig erweitert und diese Schlitze nicht vollständig vom Flanschmaterial umschlossen sind.

5. Anschlußstück nach Anspruch 1, dadurch gekennzeichnet, daß das Anschlußstück (1''') einen Loseflanschring besitzt, der Bohrungen (5a'''), Ausnehmungen (12''') und Durchbrüche (13''') von den Ausnehmungen zu den Bohrungen (5a''') aufweist und sich an dem Flansch mit den Bohrungen (5''') bzw. einem Flanschring abstützt.

6. Anschlußstück nach einem der vorhergehenden Ansprüche, dadurch gekennzeichnet, daß die dem Gegenflansch abgewandte Seite des Anschlußstückflansches (90'; 90''; 90'''') bzw. eines Loseflanschringes (14''') im Bereich der Bohrungen (5'; 5''; 5a'''; 5'''') Vertiefungen für die Zentrierung von Schraubenköpfen aufweist.

7. Anschlußstück nach einem der vorhergehenden Ansprüche, dadurch gekennzeichnet, daß durch das Einbringen eines Stopfens in mindestens eine der Ausnehmungen (12' bis 12'''') eine Verdrehsicherung herstellbar ist.

8. Anschlußstück nach einem der vorhergehenden Ansprüche, dadurch gekennzeichnet, daß die Schrauben (8') zylinderförmige Schraubenköpfe aufweisen, und daß die Zylinderoberfläche der Schraubenköpfe gerändelt ist.

9. Anschlußstück nach einem der vorhergehenden Ansprüche, dadurch gekennzeichnet, daß Schrauben verwendet werden, die im Bereich des montierten Flansches kein Gewinde aufweisen.

10. Anschlußstück nach einem der vorhergehenden Ansprüche, dadurch gekennzeichnet, daß die Bohrungen (5' bis 5'''') so angeordnet, daß sie kompatibel zu den Bohrungen (5) eines bekannten Anschlußstückes (1) sind.
